(19) **Europäisches Patentamt European Patent Office Office européen des brevets**

(11) **EP 1 330 071 B1**

(12) **FASCICULE DE BREVET EUROPEEN**

(45) Date de publication et mention de la délivrance du brevet:
**17.01.2007 Bulletin 2007/03**

(51) Int Cl.:
*H04L 12/26* (2006.01)     *H04L 29/06* (2006.01)
*H04N 7/24* (2006.01)

(21) Numéro de dépôt: **02293114.1**

(22) Date de dépôt: **17.12.2002**

(54) **Système de gestion de réseau ou de services pour la détermination de la synchronisation entre deux flots de paquets**

System für das Netzwerk- oder Dienstmanagement zur Bestimmung der Synchronisation zwitchen zwei Packetströmen

System for network or sevice management for determining the synchronisation between two packet streams

(84) Etats contractants désignés:
**AT BE BG CH CY CZ DE DK EE ES FI FR GB GR IE IT LI LU MC NL PT SE SI SK TR**

(30) Priorité: **17.01.2002 FR 0200550**

(43) Date de publication de la demande:
**23.07.2003 Bulletin 2003/30**

(73) Titulaire: **ALCATEL**
**75008 Paris (FR)**

(72) Inventeurs:
  • **Gonguet, Arnaud**
    **75013 Paris (FR)**
  • **Poupel, Olivier**
    **35190 Tinteniac (FR)**
  • **Delegue, Gérard**
    **94230 Cachan (FR)**
  • **Martinot, Olivier**
    **91210 Draveil (FR)**

(74) Mandataire: **Chaffraix, Sylvain et al**
**COMPAGNIE FINANCIERE ALCATEL**
**Département Propriété Industrielle**
**54, rue La Boétie**
**75008 Paris (FR)**

(56) Documents cités:
**WO-A-99/22477          WO-A-99/44363
US-A- 5 737 531**

• **PATENT ABSTRACTS OF JAPAN vol. 1996, no. 07, 31 juillet 1996 (1996-07-31) -& JP 08 063890 A (MITSUBISHI ELECTRIC CORP), 8 mars 1996 (1996-03-08)**
• **JACOBS S ET AL: "real-time video on the Web using dynamic rate shaping" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26 octobre 1997 (1997-10-26), pages 14-17, XP010253687 ISBN: 0-8186-8183-7**
• **XIE Y ET AL: "ADAPTIVE MULTIMEDIA SYNCHRONIZATION IN A TELECONFERENCE SYSTEM" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. 3, 23 juin 1996 (1996-06-23), pages 1355-1359, XP000625031 ISBN: 0-7803-3251-2**
• **MONTGOMERY W A: "TECHNIQUES FOR PACKET VOICE SYNCHRONIZATION" IEEE JOURNAL ON SELECTED AREAS IN COMMUNICATIONS, IEEE INC. NEW YORK, US, vol. SAC-1, no. 6, 1 décembre 1983 (1983-12-01), pages 1022-1028, XP000563228 ISSN: 0733-8716**

EP 1 330 071 B1

## Description

La présente invention est relative à la gestion des services mis en oeuvre sur un réseau de transport, notamment de télécommunication.

Il est connu qu'un même service de télécommunication puisse mettre en oeuvre plusieurs flots de données. Par exemple, un service de vidéo à la demande (VoD pour *Video on Demand,* en anglais) peut être décomposé en un flot de données purement vidéo et un flot de données audio. Chacun de ces flots est transporté selon des protocoles spécifiques et peut être géré différemment par certains éléments du réseau de transport.

On comprend toutefois que dans certains cas, le service peut nécessiter une synchronisation entre les flots de données le mettant en oeuvre.

Dans certains, le problème de la synchronisation peut être assez facilement surmonté. En effet, une synchronisation entre les paquets d'un flot de données entraîne un décalage dans la réception de ces paquets qui peut être corrigé au moyen d'un système de mémoire tampon (buffer, en anglais).

Par contre, une désynchronisation entre les flots de données (débit de paquets) entraîne une dérive, c'est-à-dire une augmentation de la désynchronisation entre paquets, rendant cette dernière impossible à corriger par les solutions de l'état de la technique.

Dans l'exemple de la vidéo à la demande, il est ainsi nécessaire que le flot audio et le flot vidéo soit suffisamment synchronisés pour fournir, en réception, une bonne qualité de service.

Le système de gestion de service doit donc être à même de déterminer si deux flots de données sont synchronisés ou non. Il doit donc pour ce faire disposer d'une méthode de mesure.

La demande de brevet japonaise JP 08 063890 décrit dans son abrégé un système de gestion pour déterminer la synchronisation entre deux flots de paquets en comparant la variation de débit sur chacun des flots, mais elle ne concerne pas d'un réseau de transport. L'application à un réseau de transport de ce principe pose un problème supplémentaire résolu par l'invention.

Pour ce faire, le système de gestion de réseau selon l'invention se caractérise en ce qu'il dispose de moyens pour mesurer les variations de débit pour chacun des flots de paquets, et pour déterminer la synchronisation par comparaison de ces variations. Les variations de débits sont calculées, pour chaque flot de paquets, comme la variation du rapport entre la taille totale des paquets, et le total des délais entre deux paquets successifs du flot de paquets, considérés sur une fenêtre temporelle.

Selon une mise en oeuvre de l'invention, deux flots de paquets sont considérés comme synchronisés si la différence de leur variations de débit respectives est inférieure à un seuil de tolérance.

L'invention a aussi pour objet un système de gestion de service, comportant un tel système de gestion de réseau.

Selon une mise en oeuvre de l'invention, les flots de paquets sont associés à un même service.

Il peut de surcroît être prévu qu'au moins un paramètre relatif à la mesure de synchronisation soient insérés dans les spécifications de niveau service, associés audit service.

Ainsi, le système de gestion de réseau peut disposer, à tout moment, d'une mesure du degré de synchronisation entre deux flots de données.

Un avantage de l'invention est tel que le système de gestion de service n'a pas à connaître le ratio attendu entre les flots de données.

L'invention et ses avantages apparaîtront de façon plus claire dans la description de mises en oeuvre qui va suivre en liaison avec les figures annexées.

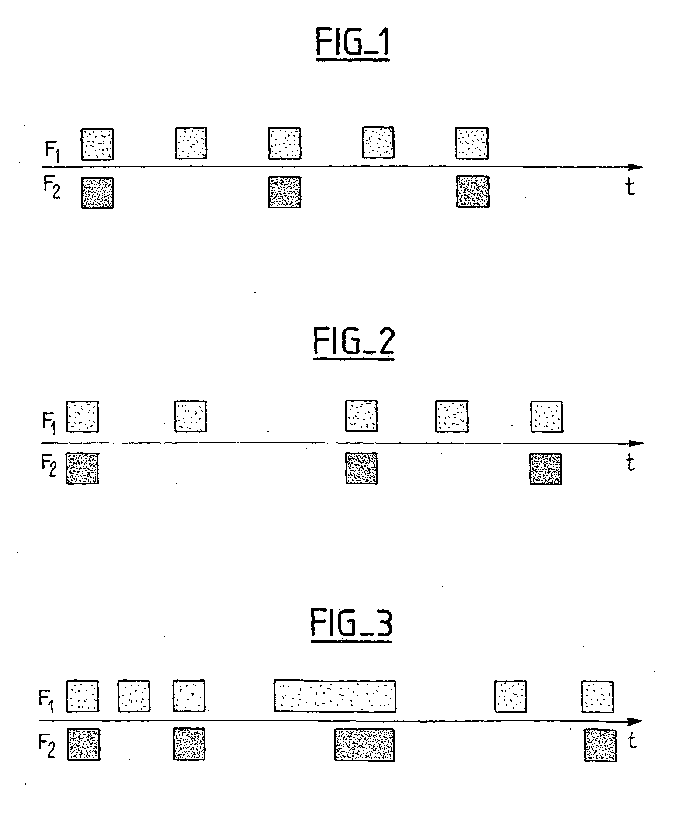

Les figures 1, 2 et 3 représentent, chacune, un chronogramme de la transmission de deux flots de paquets

Le mécanisme de mesure de synchronisation de l'invention s'applique particulièrement bien aux systèmes de gestion de services, notamment lorsque les deux flots de paquets dont on veut mesurer la synchronisation appartiennent à un même service. Toutefois, l'invention est susceptible de s'appliquer à la mesure de la synchronisation de deux flots de paquets quelconques.

Il est connu d'associer à un service, un accord de niveau service ou SLA pour *Service Level Agreement*, donnant lieu à une spécification de niveau service ou SLS (pour *Service Level Specification*).

Selon une mise en oeuvre de l'invention, on peut insérer dans ce SLS, un ou plusieurs paramètres relatifs à la synchronisation de deux (ou plus) flots de données.

Ces paramètres peuvent simplement consister en un indicateur indiquant que les deux flots de paquets doivent être synchronisés. Ils peuvent aussi consister en un seuil de tolérance, spécifiant quel degré de liberté on peut laisser à la synchronisation. Dans la mise en oeuvre de l'invention qui a été réalisée, ce seuil de tolérance était nommé SDT pour « *Synchronization Deviation Tolerance* ».

Le système de gestion de réseau dispose de moyens pour mesurer les variations de débit pour chacun des flots de paquets.

Selon un mode de réalisation de l'invention, ces variations de débits sont calculées, pour chaque flot de paquets, comme la variation du rapport entre la taille totale des paquets et le total des délais entre deux paquets successifs d'un même flot de paquets, considérés sur une fenêtre temporelle.

Les figures 1 à 3 illustrent différentes situations d'évolution de deux flots de paquets synchronisés. Chacune de ces figures présente des chronogrammes de la transmission de deux flots de paquets, $F_1$, $F_2$. L'axe des abscisses représente le temps t. Sur ces 3 chronogrammes, les paquets sont schématisés par des rectangles hachurés. La longueur de ces rectangles, selon l'axe du temps, représente directement la taille du paquet. De même, le délai entre paquet est directement lu de l'écart entre les rectangles correspondants.

Sur la figure 1, le délai entre deux paquets successifs des flots de paquets est constant, de même que leur taille.

Sur la figure 2, la taille des paquets reste constante, mais le délai entre deux paquets successifs varie.

Sur la figure 3, à la fois la taille des paquets et le délai entre paquets successifs varient.

Le système de gestion de réseau mesure, sur une fenêtre temporelle donnée $\Delta t$ :

■ la taille des paquets, $p_{1,i}$, $p_{2,i}$ respectivement pour les deux flots de paquets, ainsi que,

■ le délai $d_{1,i}$ et $d_{2,i}$ entre deux paquets successifs, pour chaque flot de paquets.

L'indice i indique le rang du paquet dans la fenêtre temporelle $\Delta t$, tandis que le premier indice (1 ou 2) spécifie le flot de paquets.

Le système de gestion de réseau peut alors déterminer la synchronisation des flots de paquets en comparant les variations de débits de ces flots. Cela permet d'ignorer le ratio attendu entre les débits. A titre d'exemple, on admettra que deux flots restent synchronisés si la variation de début d'un flot n'excède pas 5% de la variation du débit de l'autre flot, quelque soit la valeur effective de ces débits. Les débits sont calculés comme étant les rapports entre la taille totale des paquets et le total des délais entre paquets successifs d'un même flot, considérés sur une fenêtre temporelle, pour chaque flot de données.

Autrement dit, cela revient à calculer la variation pour le premier flot de paquets selon l'expression :

$$\Delta\left(\frac{\sum_{\Delta t} p_{1,i}}{\sum_{\Delta t} d_{1,i}}\right), \text{ puis la variation pour le second flot de}$$

paquets selon l'expression $\Delta\left(\dfrac{\sum_{\Delta t} p_{2,i}}{\sum_{\Delta t} d_{2,i}}\right).$

Dans ces expressions, le symbole $\Delta$ exprime le calcul d'une variation par rapport au temps. L'expression

$\displaystyle\sum_{\Delta t}$ indique que l'on fait une somme pour tous les paquets compris dans la fenêtre temporelle $\Delta t$.

Selon un mode de réalisation particulier, afin de faciliter la comparaison des variations, le système de gestion de réseau peut calculer l'expression suivante :

$$\left|\Delta\left(\frac{\sum_{\Delta t} p_{1,i}}{\sum_{\Delta t} d_{1,i}}\right) - \Delta\left(\frac{\sum_{\Delta t} p_{2,i}}{\sum_{\Delta t} d_{2,i}}\right)\right|$$

La valeur ainsi obtenue peut alors être comparer à un seuil de tolérance SDT (pour *Synchronization Deviation Tolerance*, en anglais, ou Tolérance de déviation de synchronisation), ainsi qu'il a été précédemment évoqué.

Dans la mesure où

$$\left|\Delta\left(\frac{\sum_{\Delta t} p_{1,i}}{\sum_{\Delta t} d_{1,i}}\right) - \Delta\left(\frac{\sum_{\Delta t} p_{2,i}}{\sum_{\Delta t} d_{2,i}}\right)\right| \leq SDT , \text{ le système}$$

de gestion de réseau considère que les deux flots de paquets sont synchronisés. Inversement, dès que cette condition n'est plus remplie, il considère que les deux flots de paquets ne sont plus synchronisés.

Il peut alors déclencher des actions prédéfinies, comme notamment alerter l'opérateur afin que celui-ci puisse réagir.

Selon un mode de réalisation de l'invention, on peut insérer dans le SLS, un paramètre définissant la fenêtre temporelle sur laquelle les mesures doivent être effectuées. Il peut par exemple s'agir d'une périodicité.

**Revendications**

1. Système de gestion de réseau pour déterminer la synchronisation entre deux flots de paquets transmis au sein d'un réseau de transport, où le système dispose de moyens pour mesurer les variations de débit pour chacun desdits flots de paquets, et pour déterminer la synchronisation par comparaison desdites variations, **caractérisé en ce que** lesdites variations de débits sont calculées, pour chaque flots de paquets, comme la variation du rapport entre la taille totale des paquets, et le total des délais entre deux paquets successifs dudit flot de paquets, considérés sur une fenêtre temporelle.

2. Système de gestion de réseau selon la revendication 2, dans lequel deux flots de paquets sont considérés comme synchronisés si la différence de leurs variations de débit respectives est inférieure à un seuil de tolérance.

3. Système de gestion de service, comportant un système de gestion de réseau selon l'une des revendications précédentes.

4. Système de gestion de service selon la revendication précédente, dans lequel lesdits flots de paquets sont associés à un même service.

5. Système de gestion de service selon la revendication précédente, dans lequel au moins un paramètre relatif à ladite mesure de synchronisation sont insérés dans les spécifications de niveau service, associés audit service.

**Claims**

1. Network management system for determining the synchronization between two streams of packets transmitted in a transport network, wherein the system has means available for measuring the throughput variations for each of said streams of packets and for determining the synchronization by comparison of said variations, **characterized in that** said throughput variations are calculated, for each stream of packets, as the variation of the ratio between the total size of the packets and the total delays between two successive packets of said stream of packets, considered over a time window.

2. Network management system according to claim 2, wherein two streams of packets are considered as synchronized if the difference in their respective throughput variations is less than a tolerance threshold.

3. Service management system including a network management system according to either of the preceding claims.

4. Service management system according to the preceding claim, wherein said streams of packets are associated with the same service.

5. Service management system according to the preceding claim, wherein at least one parameter relating to said measurement of synchronization is inserted into the service level specifications associated with said service.

**Patentansprüche**

1. System für das Netzwerkmanagement zum Bestimmen der Synchronisation zwischen zwei Paketströmen, die in einem Transportnetz übertragen werden, wo das System über Mittel verfügt, um die Durchsatzschwankungen für jeden dieser Paketströme zu messen und die Synchronisation durch Vergleich dieser Schwankungen zu bestimmen, **dadurch gekennzeichnet, dass** diese Durchsatzschwankungen für jeden Paketstrom berechnet werden als die Schwankung des Verhältnisses zwischen der Gesamtgröße der Pakete und der Gesamtsumme der Verzögerungen zwischen zwei aufeinander folgenden Paketen dieses Paketstroms, bezogen auf ein Zeitfenster betrachtet.

2. System für das Netzwerkmanagement gemäß Anspruch 2, bei dem zwei Paketströme als synchronisiert gelten, wenn die Differenz ihrer jeweiligen Durchsatzschwankungen unter einer Toleranzschwelle liegt.

3. System für das Dienstmanagement, das ein System für das Netzwerkmanagement gemäß einem der vorstehenden Ansprüche enthält.

4. System für das Dienstmanagement gemäß dem vorstehenden Anspruch, bei dem diese Paketströme zu ein und demselben Dienst gehören.

5. System für das Dienstmanagement gemäß dem vorstehenden Anspruch, bei dem mindestens ein Parameter betreffend diese Synchronisationsmessung in die Spezifikationen für die Dienstgüte, die zu diesem Dienst gehören, eingefügt wird.

## FIG_1

## FIG_2

## FIG_3